# EUROPEAN PATENT APPLICATION

(11) **EP 3 156 915 A1**
(43) Date of publication of application: **19.04.2017**
(21) Application number: 14895056.1
(22) Date of filing: 12.08.2014
(51) Int. Cl.: G06F 17/30

(54) **METHOD, DEVICE AND TERMINAL FOR DATA PROCESSING**

(30) Priority: 16.06.2014 CN 201410268541
(71) Applicant: ZTE Corporation, Shenzhen, Guangdong 518057 (CN)
(72) Inventor: LV, Heping, Shenzhen Guangdong 518057 (CN); YANG, Qingfeng, Shenzhen Guangdong 518057 (CN)
(74) Representative: Potter Clarkson LLP
(86) International application number: PCT/CN2014/084168
(87) International publication number: WO 2015/192447

(57) **Abstract**

The present invention provides a method, device and terminal for data processing. The method includes: extracting text information from a user interface, obtaining an operation instruction corresponding to the text information on the basis of the text information, wherein the operation instruction is used for starting an application program or a service process; performing the operation instruction. The present invention effectively solves the problem that the application or the service can not be started quickly in a circumstance in which voice recognition is limited. By detecting the text information, obtaining the operation instruction corresponding to the text information and triggering the operation instruction, the present invention can quickly start the application program, improving the effect of user experience.

## Description

### TECHNICAL FIELD

The present disclosure relates to technical field of data processing, and more particularly, to a method, device and terminal for data processing.

### BACKGROUND

The speech technology develops quickly, and relates to respective aspects of speech recognition. Based on the speech recognition technology, the user may execute shortcut operations, and reduce time for starting up an application or service. For example, the user inputs speech "Open an address book", then after recognizing the speech data, a terminal may quickly open the address book.

However, the complexity of the speech recognition technology is very high, the recognition accuracy can still be improved, and the speech recognition technology has a certain requirement for ambient environment, for example, a relatively quiet environment is needed. Moreover, some engines can acquire subsequent action instructions with the help of network exchange information manner, so as to achieve the purpose of quickly starting up the application or service, which is unfriendly for actual operations by the user.

At present, in the circumstance where the speech condition is restricted (such as a conference mode), or in an interface presenting texts (such as a short message conversation interface, and a webpage browsing interface), the speech recognition is restricted. At this time, if the user wants to execute a shortcut operation, he/she can only open the corresponding application manually, and input the operation needing to be executed in the application. In this way, the purpose of quickly starting up the application or service cannot be achieved. For example, the user wants to search a position at which an address A is located, when the speech recognition is restricted, the user can only manually open the map application, input the address A, and search the position at which the address A is located. The operation procedure is complex, and the user experience is poor.

### SUMMARY

The technical problem to be solved by embodiments of the present disclosure is to provide a method, device and terminal for processing data, which at least solve the problem that the application or service cannot be started up quickly in a circumstance where the speech recognition is restricted.

In order to solve the above technical problem, the embodiments of the present disclosure are implemented by the following technical solutions.

In an embodiment of the present disclosure, a method for processing data is provided, which includes: extracting text information in a user interface; obtaining an operation instruction corresponding to the text information on the basis of the text information, wherein the operation instruction is used for starting an application program or a service process; and performing the operation instruction.

The obtaining an operation instruction corresponding to the text information on the basis of the text information includes: parsing a keyword in the text information; and searching an operation instruction corresponding to the keyword from a preset grammar rule base, wherein the grammar rule base is recorded with the operation instructions corresponding to different keywords.

Before parsing the keyword in the text information, the method further includes: performing a fault-tolerant processing on the extracted text information.

After performing the operation instruction, the method further includes: using the keyword as information for performing the application program or the service process.

Before performing the operation instruction, the method further includes: displaying display information and/or an action option set for the operation instruction.

The performing the operation instruction includes: when a plurality of operation instructions are obtained, performing a selected operation instruction, or performing the operation instructions according to a preset order.

In another embodiment of the present disclosure, a device for processing data is provided, which includes: an extraction module configured to extract text information in a user interface; an obtaining module configured to obtain an operation instruction corresponding to the text information on the basis of the text information, wherein the operation instruction is used for starting an application program or a service process; and a performing module configured to perform the operation instruction.

The obtaining module is further configured to: parse a keyword in the text information; and search an operation instruction corresponding to the keyword from a preset grammar rule base, wherein the grammar rule base is recorded with the operation instructions corresponding to different keywords.

The obtaining module is further configured to perform a fault-tolerant processing on the extracted text information.

The performing module is further configured to use the keyword as information for performing the application program or the service process.

The device further includes: a display module configured to display display information and/or an action option set for the operation instruction.

The performing module is further configured to: when a plurality of operation instructions are obtained, perform a selected operation instruction, or trigger the operation instructions according to a preset order.

In another embodiment of the present disclosure, a terminal is provided, which uses the above-mentioned device for processing data.

The advantageous effects of the embodiments of the present disclosure are as follows.

In the embodiments of the present disclosure, by detecting text information, obtaining an operation instruction corresponding to the text information, and performing the operation instruction, the application program or service is started up quickly, the problem that the speech recognition is restricted is avoided, and the experience effect of the user is improved.

### BRIEF DESCRIPTION OF THE DRAWINGS

Fig. 1 is a flow chart of a method for processing data according to an embodiment of the present disclosure;
Fig. 2 is a flow chart of a step for obtaining an operation instruction corresponding to text information according to an embodiment of the present disclosure;
Fig. 3 is a flow chart of a method for processing data according to an embodiment of the present disclosure;
Fig. 4 is a schematic diagram of a user interface according to an embodiment of the present disclosure; and
Fig. 5 is a structural diagram of a device for processing data according to an embodiment of the present disclosure.

### DETAILED DESCRIPTION

In order to solve the problem of being unable to quickly start up an application or service in a circumstance in which speech recognition is restricted, embodiments of the present disclosure provide a method, device and terminal for processing data.

The primary idea of the embodiments of the present disclosure is to obtain text information in a user interface, and perform an operation instruction corresponding to the text information according to the text information. In this way, an application program or service may be started up quickly, and even in a circumstance where speech recognition is restricted, the execution of this manner may not be influenced, and the execution efficiency is improved.

Hereinafter, further detailed explanations to the embodiments of the present disclosure are given in combination with the drawings and the embodiments. It should be understood, the specific embodiments described herein are only used for explaining the present disclosure, rather than restricting the present disclosure.

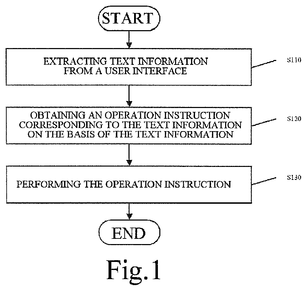

Fig. 1 is a flow chart of a method for processing data according to an embodiment of the present disclosure. As shown in Fig. 1, the method may include the following steps.

In step S110, text information in a user interface (UI) is extracted.

The text information includes a word, a letter, a character, and the like.

The extracting the text information in the user interface includes: monitoring an element in the user interface in real time; determining whether the element in the user interface is operated; when the element is operated, detecting whether the element has text information; if the element has the text information, recognizing the text information, and extracting out the text information from the element; and if the element in the user interface is not operated, or the element does not have the text information, continuing to monitor or detect the element in the user interface.

The element in the user interface is a carrier of the text information, and includes, but is not limited to an icon, a button, a dialog box, a webpage, and a search bar. All the elements in the user interface include a text attribute. The text attribute includes the text information.

Extracting out the text information from the element means separating out information, such as a word, a letter, or a character, from the element, for example, separating out a word inputted by a user from a dialog box of a short message. Further, the text information may be extracted from the text attribute of the element.

In particular, in an android system, the elements are collectively referred to as controls. For a terminal adopting the android system, extracting the text information in the user interface mainly depends on the existing control separating technology, so as to separate out the controls in the user interface, and extract the text information in the text attribute of the controls. The control separating technology includes "hierarchy viewer", "uiautomatorviewer", and the like. The control separating technology may also be a self-defining program set by a developer, by which the text information in the controls is extracted by utilizing pixel collecting points in a screen.

After being extracted out, the text information is stored into a designated stack or an array of variables.

When there are a plurality of elements in the user interface, an application program name, and a process name and/or a process identification (PID) to which the text information belongs may also be acquired. The text information, the application program name, and the process name and/or the PID are stored correspondingly.

In an embodiment, a text escape mode may be defined in the terminal, the text escape mode is enabled, and the data processing function of the present disclosure is started up. The text escape mode may be implemented by a menu, a submenu, a switch, or the like in the settings of the system. The text escape mode may be enabled by clicking a control icon, or a physical button, for example, pressing a home key for a long time, pressing an up key and a down key at the same time, or the like. After enabling the text escape mode, the elements in the user interface may be monitored in real time so as to extract the text information in the user interface.

In step S120, an operation instruction corresponding to the text information is obtained based on the text information.

The operation instruction refers to a command for starting up an application program or service process, wherein the service is, for example, a Global Positioning System (GPS) process.

The procedure of obtaining the operation instruction corresponding to the text information includes: parsing a keyword in the text information; and searching an operation instruction corresponding to the keyword from a preset grammar rule base. The grammar rule base is recorded with the operation instructions corresponding to different keywords.

In particular, the grammar rule base includes a mapping relation and a grammar rule. The mapping relation includes at least a mapping relation (a corresponding relation) between keywords and application programs, a mapping relation between the application programs and the operation instructions, and a mapping relation between the operation instructions and display information. The grammar rule at least includes: a fault-tolerance rule, a parsing rule, and a standardization processing rule. Further, the grammar rule base may be a data table or a database.

In an embodiment, the operation instruction and the application program in the grammar rule base use a machine identification code or a machine identification sentence. The machine identification code and the machine identification sentence can be quickly identified by the system. For example, in the android system, a "startActivity (Intent)" sentence may be used to start up one process or application.

The grammar rule base may be generated locally. For example, the grammar rule base may be generated by collecting local application programs; or may be generated by a server, and then synchronously loaded/updated to local device via the server. However, one program needs to be set locally, and the program is set to detect which operation instruction may be implemented locally, otherwise a null pointer exception may be occurred.

In an embodiment, before parsing the keyword in the text information, the method further includes: performing a fault-tolerant processing on the extracted text information. The purpose of the fault-tolerant processing is performing a spell and syntax checking on the text information, and correcting mistakes in the text information, such as correcting wrongly written characters in the text information.

In an embodiment, after parsing the keyword in the text information, the method further includes: performing a standardization processing on the parsed keyword to unify forms of the keywords.

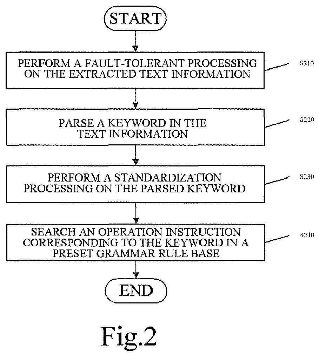

Fig. 2 is a flow chart of a step for obtaining an operation instruction corresponding to text information according to an embodiment of the present disclosure.

In step S210, a fault-tolerant processing is performed on the extracted text information.

The fault-tolerant rule is set in the grammar rule base in advance. In detail, the fault-tolerant rule may be a mapping relation between mistake spellings, syntax and correct spellings, syntax; or may be an error-detecting algorithm obtained by training according to a manner of artificial intelligence; or may be an existing error-detecting algorithm.

In step S220, a keyword in the text information is parsed out.

The parsing rule is set in the grammar rule base in advance. The parsing rule is used for determining a keyword in the text information. For example, the parsing rule includes a word, a letter and a character which may be used as the keyword. If such word, letter or character exists in the text information, it may function as the keyword of the text information.

In particular, a keyword in the text information is directly searched out according to the keyword contained in the parsing rule. Also, the text information may be split, and the split respective data portions are analyzed to extract the keyword therein. The split rule may be set in the parsing rule. The text information may be split according to the grammatical structure. For example, the text information is "I'm in Zhongshan Road", and the text information is split according to the grammatical structure of subject-verb-object-attributive-adverbial-complement. After splitting the text information, portions of "I", "in", "Zhongshan" and "Road" may be obtained, wherein the parsing rule includes "Road", then the "Road" in the text information may be used as the keyword.

In step S230, a standardization processing is performed on the parsed keyword.

The standardization processing refers to unifying keywords of different forms.

Since the parsed keywords have different forms, for example, the keyword may be forms of Chinese, English, Japanese, and the like, the keywords having different forms are converted into a unified form, for example, the keywords are converted into English form.

The standardization processing rule of the keyword may be set in the grammar rule base in advance. For example, English words are set for Chinese characters or words in a one-to-one correspondence.

The standardized keyword is buffered in a character array or stack.

In an embodiment, after the standardization processing is performed on the keyword, an escape sentence is formed based on the keyword. The escape sentence is a machine identification code or a machine identification sentence. The forming rule of the escape sentence may be set in the grammar rule base. For example, the English word of the keyword "Road" is "road", the escape sentence of the "road" is "go to x road", and "x" is a variant in the escape sentence. When splitting the text information, if a keyword and an attributive of the keyword are obtained, the attributive may be used as a variable value of the variant in the escape sentence. For example, the "Zhongshan Road" is split and "Zhongshan" and "Road" are obtained, the "Zhongshan" is used as the attributive of the keyword "Road", then the "Zhongshan" may be used as the variable value. If the keyword may be converted into the escape sentence, then a mapping relation between the keywords and the escape sentences is set in the grammar rule base in advance, and information is searched in the grammar rule base according to the keywords and the escape sentences thereof.

In step S240, an operation instruction corresponding to the keyword is searched in a preset grammar rule base. The keyword has undergone the standardization processing.

The mapping relation with the keyword is searched by using the keyword as a search word, so as to obtain the operation instruction corresponding to the keyword. If no operation instruction corresponding to the keyword is searched out, then it is displayed that the search is failed, or the text information in the user interface is continued to be extracted.

The extracted keyword may be one or more than one. The operation instruction corresponding to the keyword may also be one or more than one. If the keyword is in a form of C and D, then the mapping relation with C, the mapping relation with D, and the mapping relation with C and D may be searched in the grammar rule base. For example, the keyword is "weather" + "road", then the mapping relation with "weather", the mapping relation with "road" and the mapping relation with "weather" and "road" may be searched in the grammar rule base.

After forming the escape sentence based on the keyword, the keyword and the escape sentence may be used as the search word, then by searching in the mapping relation, the operation instruction corresponding to the keyword and the escape sentence is obtained.

For example, the keyword is "road", the escape sentence is "go to x road", then the mapping relation shown in the following Table 1 may be searched out.

**Table 1**

| Keyword | Escape sentence | Application program | Operation instruction | Display information |
|---|---|---|---|---|
| road | go to x road | com.android.g ooglemap | send intent to (com.android.googlemap, x road) | Google map positions x road |
| | | com.baidu.map | send intent to (com.baidu.map, x road, gps (now station)) | Baidu map positions x road and current location |
| | | com.good.map | send intent to (com.android.googlemap, line (x road, gps (now station))) | Gaode map navigates from x road to the current location |

In step S130, the operation instruction is performed.

When the search is successful, one or more than one operation instructions corresponding to the keyword are obtained.

When more than one operation instructions are obtained, the selected operation instruction is performed, or the operation instructions are performed in a preset order. The performance order may be arranged according to search time, or may be arranged according to priorities of the operation instructions. The priority of the operation instruction may be set by a designer.

The more than one operation instructions may be split according to types, and the operation instructions having the same type constitute one queue. The type of the operation instruction may be a priority of the operation instruction, an application program needing to be started up by the operation instruction, and the like. For example, a unique queue is formed for processing an alarm clock instruction, and a unique queue is formed for processing a positioning instruction.

Before performing the operation instruction corresponding to the text information, the method further includes: displaying display information and/or an action option set for the operation instruction. The display information is corresponding to the operation instruction. As shown in Table 1, the display information may be obtained from the grammar rule base. The action option refers to an option for human-computer interaction, for example, inviting the user to select whether to perform the operation instruction. Further, when the obtained operation instructions are multiple, the menu action option containing a plurality of display information may be displayed, and when the display information in the menu is selected, the operation instruction corresponding to the display information is performed.

After performing the operation instruction, in the android system, the corresponding application program or service process is started up by using "intent" component; while in the windos system, the corresponding application program or service process may be started up by "hook" program.

After performing the operation instruction corresponding to the text information, the corresponding application program or service is started up, the keyword is used as information for performing the application program or the service process, so as to perform the action relevant to the keyword. For example, the operation instruction "send intent to (com.baidu.map, x road, gps (now station))" in Table 1 includes the sentence "gps (now station)", then after performing the operation instruction, GPS system may be called to position the current geographic location, and after positioning the current geographic location, a navigation from the current geographic location to "x road" is achieved.

By using the above method, the purpose of quickly starting up the application program or service in a circumstance where the speech recognition technology is restricted is achieved. During this process, the requirement by the user may be automatically recognized, and if it is found that the user needs to start up the application program or service, the selection for the subsequent actions is provided for the user, and is performed by using a system-level command, thereby the execution efficiency is high, and the user experience is good.

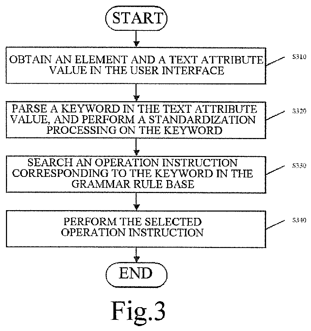

Based on the above method, an example is given for explaining the method for processing data according to the present disclosure. Fig. 3 is a schematic diagram of a user interface according to an embodiment of the present disclosure. As shown in Fig. 3, the system used in the present embodiment is the android system.

In step S310, an element and a text attribute value (text information) in the user interface are obtained.

The element and the text attribute value in the user interface are obtained by using "uiautomatorviewer".

There are 3 controls in the current user interface.

The control 1 is "TextView", and its text attribute value 1 (text information) is "Chatting interface between X and Y".

The control 2 is "Multiline Text", and its text attribute value 2 is "I'm in Zhongshan Road".

The control 3 is "Multiline Text", and its text attribute value 3 is "Ok, I'll go".

The activity name to which the controls 1-3 belong is "talklistActivty".

The text attribute values and the activity name of the controls 1-3 are extracted.

In step S320, a keyword in the text attribute value is parsed, and a standardization processing is performed on the keyword.

According to the grammatical structure of Chinese, the above three text attribute values are parsed.

The text attribute value 1 is parsed, and then "X", "and", "Y", "Chat", and "interface" may be obtained.

The text attribute value 2 is parsed, and then "I", "in", "Zhongshan" and "Road" may be obtained.

The text attribute value 3 is parsed, and then "Ok", "I", "will", and "go" may be obtained.

If in the parsing rule of the grammar rule base, only "road" is included, then the "Road" in the text attribute value 2 is used as the keyword. The keyword is converted into English "road". The escape sentence of "road" is "go to xx road". The attributive "Zhongshan" of "Road" is used as the variable value in the escape sentence and the operation instruction.

The keyword, the escape sentence and the activity name are recorded, as shown in Table 2 below.

**Table 2**

| | |
|---|---|
| Keyword | road |
| Escape sentence | go to xx road |
| Activity name | talklistActivty |

In step S330, in the grammar rule base, an operation instruction corresponding to the keyword is searched.

By searching the grammar rule base, the search result shown in Table 1 may be obtained.

The three types of operation instructions are taken out, and three "intent" examples are instanced by using the android system:
intent1= send intent to (com.android.googlemap, x road);
intent2= send intent to (com.baidu.map, x road, gps (now station));
intent3= send intent to (com.android.googlemap, line (x road, gps (now station))).

The operation instruction, the display information and the activity name for identifying key information in the user interface process in Table 2 are recorded in the memory, as shown in Table 3 below.

**Table 3**

| intent name | activity name | Display information |
|---|---|---|
| intent1 | talklistActivty | Google map positions xx road |
| intent2 | talklistActivty | Baidu map positions xx road and current location |
| intent3 | talklistActivty | Gaode map navigates from xx road to the current location |

In step S340, the selected operation instruction is performed.

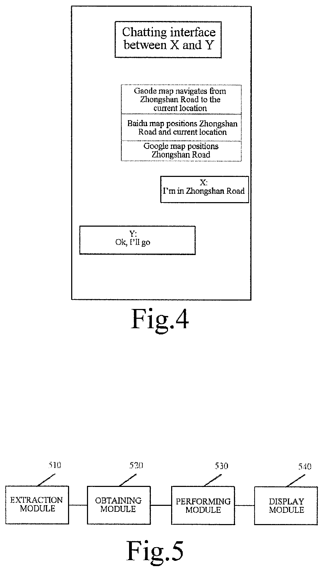

The menu options of display information of 3 "Intent" are displayed in the user interface. Fig. 4 is a schematic diagram of a user interface according to an embodiment of the present disclosure. In Fig. 4, the variable "xx" in each display information in Table 3 is replaced by the variable value "Zhongshan", and the display information is displayed in the user interface in a form of list. When the user selects one of the display information, the "intent" corresponding to this display information is selected. For example, when the user clicks "Google map positions xx road", the menu click event executes one instruction, "sendIntent()" manner is used for starting up the Gaode navigation, and the information of "Zhongshan Road" is inputted into the navigation map, in this way, the user may intuitively perceive the map.

The embodiments of the present disclosure also provide a device for processing data. Fig. 5 is a structural diagram of a device for processing data according to an embodiment of the present disclosure.

The device includes: an extraction module 510 and an obtaining module 520.

The extraction module 510 is configured to extract text information in a user interface.

The obtaining module 520 is configured to obtain an operation instruction corresponding to the text information on the basis of the text information, wherein the operation instruction is used for starting an application program or a service process.

The obtaining module 520 is specifically configured to parse a keyword in the text information; and search an operation instruction corresponding to the keyword from a preset grammar rule base. The grammar rule base is recorded with the operation instructions corresponding to different keywords. Further, the obtaining module 420 is further configured to perform a fault-tolerant processing on the extracted text information.

The device also includes a performing module 530 configured to perform the operation instruction corresponding to the text information. The performing module 430 is specifically configured to, when more than one operation instructions are obtained, perform a selected operation instruction, or perform the operation instructions according to a preset order. The performing module 530 is further configured to use the keyword as information for performing the application program or the service process.

The device also includes a display module 540 configured to display display information and/or an action option which are set for the operation instruction.

The device for processing data is provided in a terminal, and provides the data processing function to a user using the terminal, such that the application program or service can be quickly started up.

The functions of the device described in the embodiments of the present disclosure haven been described in the method embodiments shown in Figs. 1-4. The portion which is not described in detail in the embodiments may be referred to the relevant explanations in the forgoing embodiments, which is not elaborated herein.

For illustration, the preferable embodiments of the present disclosure have been disclosed. However, the person skilled in the art can appreciate that various improvements, additions and replacements are possible, and the scope of the present disclosure is not limited to the above embodiments.

### Industrial applicability

As mentioned above, the embodiments of the present disclosure provide a method, device and terminal for processing data, which has the following advantageous effects: by detecting the text information, acquiring the operation instruction corresponding to the text information, and triggering the operation instruction, the application program can be quickly started up, and the user experience can be improved.

## Claims

1. A method for processing data, comprising:
extracting text information in a user interface;
obtaining an operation instruction corresponding to the text information on the basis of the text information, wherein the operation instruction is used for starting an application program or a service process; and
performing the operation instruction.

2. The method of claim 1, wherein the obtaining the operation instruction corresponding to the text information on the basis of the text information comprises:
parsing a keyword in the text information; and
searching an operation instruction corresponding to the keyword from a preset grammar rule base, wherein the grammar rule base is recorded with the operation instructions corresponding to different keywords.

3. The method of claim 2, wherein before parsing the keyword in the text information, the method further comprises: performing a fault-tolerant processing on the extracted text information.

4. The method of claim 2, wherein after performing the operation instruction, the method further comprises: using the keyword as information for performing the application program or the service process.

5. The method of claim 1 or 2, wherein before performing the operation instruction, the method further comprises: displaying display information and/or an action option set for the operation instruction.

6. The method of claim 5, wherein the performing the operation instruction comprises:
when a plurality of operation instructions are obtained, performing a selected operation instruction, or performing the operation instructions according to a preset order.

7. A device for processing data, comprising:
an extraction module configured to extract text information in a user interface;
an obtaining module configured to obtain an operation instruction corresponding to the text information on the basis of the text information, wherein the operation instruction is used for starting an application program or a service process; and
a performing module configured to perform the operation instruction.

8. The device of claim 7, wherein the obtaining module is further configured to:
parse a keyword in the text information; and
search an operation instruction corresponding to the keyword from a preset grammar rule base, wherein the grammar rule base is recorded with the operation instructions corresponding to different keywords.

9. The device of claim 8, wherein the obtaining module is further configured to perform a fault-tolerant processing on the extracted text information.

10. The device of claim 8, wherein the performing module is further configured to use the keyword as information for performing the application program or the service process.

11. The device of claim 7 or 8, further comprising: a display module configured to display display information and/or an action option set for the operation instruction.

12. The device of claim 11, wherein the performing module is further configured to:
when a plurality of operation instructions are obtained, perform a selected operation instruction, or trigger the operation instructions according to a preset order.

13. A terminal using the device for processing data of any of claims 7-12.
